# EUROPEAN PATENT SPECIFICATION

(11) **EP 3 647 611 B1**
(45) Date of publication and mention of the grant of the patent: **14.04.2021**
(21) Application number: 19205957.4
(22) Date of filing: 29.10.2019
(51) Int. Cl.: F16B 37/04, F16B 39/282

(54) **CHANNEL FASTENER HAVING RETENTION FINGERS**
KANALBEFESTIGUNGSVORRICHTUNG MIT HALTEFINGERN
FIXATION DE CANAL COMPORTANT DES DOIGTS DE RÉTENTION

(30) Priority: 05.11.2018 NL 2021937
(43) Date of publication of application: 06.05.2020
(73) Proprietor: J. van Walraven Holding B.V., 3641 RK Mijdrecht (NL)
(72) Inventor: NIJDAM, Frank, 3893 BA Zeewolde (NL); JUZAK, Marek, 3641 TK Mijdrecht (NL)
(74) Representative: EP&C

(56) References cited:
- US-A- 4 285 379
- US-S1- D 494 887

## Description

The invention relates to a channel fastener according to the preamble of claim 1.

Such a channel fastener is typically used with channel elements, in the technical field concerned often called mounting rails. A particular type of mounting rail that the channel fasteners are used with is known in the field as a "strut rail", which is a mounting rail having generally a C-shaped cross section, wherein the flanges are folded inwardly such that the edges of the flanges are facing the bottom of the rail. However, the channel fasteners can also be used with normal C-shaped rails, having flanges that extend with their edges towards each other, or other channel type profiles that have flanges defining a slot between them.

The US Design Patent 494,887 shows a channel fastener for use with mounting rails. This known channel fastener is an assembly of a metal washer element, a plastic support and a metal anchoring element. The metal anchoring element is formed as an oblong nut with a threaded bore in the centre. On an upper side of the oblong nut grooves are formed which extend in the transverse direction. This is typical for channel fasteners which are used in combination with strut rails. The edges of the respective flanges of the strut rail are in a mounted state received in the respective grooves on the upper side of the nut. The plastic support is an integrally formed part including a cage which carries the metal anchoring element, and furthermore including a head portion that is connected to the washer. Two opposite spring elements surrounding the washer element are connected to the head portion and are adapted to engage flanges of the channel element. The oblong anchoring element of the fastener can be aligned with the longitudinal slot of a channel element and subsequently the anchoring element can be inserted through the longitudinal slot into the channel element. Subsequently after turning of the fastener, the anchoring element extends at an angle relative to the longitudinal slot, such that the flanges of the channel element are located in accommodation spaces between the washer element and longitudinal end portions of the anchoring element. In this position the spring elements engage the flanges of the channel element and pull the fastener upwards such that the longitudinal end portions of the anchoring element are pulled in engagement with the flanges of the channel element. In this state the channel fastener is in a preliminary mounting state, in which it is held stationary on the channel element by the spring force of the spring elements and can still be readily moved along the channel element towards its desired position. When the fastener is in its desired position, the anchoring element and the washer element can be tensioned towards each other by means of a male fastening element such as a threaded rod screwed in the oblong anchoring element and a nut engaging the washer element. The flanges of the channel element are thereby clamped between the longitudinal end portions of the anchoring element and the washer element in order to fix the fastener to the channel element.

The known channel fastener has retention lugs formed on an inner side of the connecting legs, which lugs engage over the upper edge of the anchoring element. A problem in practise is that the anchoring elements that are provided to an assembly line to assemble the channel fastener may have varying thicknesses due to for example manufacturing tolerances and variations in the blank material from which the anchoring element is made. The retention lugs of the known channel fastener are however not convenient in view of varying thicknesses of the anchoring element. If the anchoring element has a small thickness there may be a play between the lugs and the upper side of the anchoring element, which gives the assembly a non-robust feel and look. If the anchoring element is thicker the lugs may engage the side of the anchoring element instead of gripping over the upper edge. The retention is in that case based on friction which is less reliable than of the interlocking engagement when the lugs engage over the upper edge of the anchoring element.

The invention has for an object to provide a channel fastener able to reliably retain the anchoring element on the support.

This object can be achieved by a channel fastener according to the preamble of claim 1, wherein the support includes one or more resilient retention fingers having a proximal end connected to the head portion and a distal end located near or in contact with the anchoring element, in particular the upper side of the anchoring element, so as to retain the anchoring element on the bottom portion of the support.

The one or more retention fingers according to the invention allow that anchoring elements having varying thicknesses can be assembled with the same support whilst the anchoring element is securely retained on the bottom portion by the retention fingers. The retention fingers are adapted to allow that the anchoring element is moved towards the washer element when the washer element and the anchoring element are tightened together by a male fastening element, possibly in cooperation with a nut. Thereto the retention fingers are resiliently deformable.

Preferably the one or more retention fingers extend from head portion, in particular from a main body of the head portion, obliquely towards the upper side of the anchoring element and are adapted to retain the anchoring element on the bottom portion of the support in an unmounted state. The oblique position of the retention fingers facilitates their deformation for allowing the anchoring element to move towards the washer element.

In a possible embodiment of the channel fastener according to the invention the one or more retention fingers extend from the head portion downward and in transverse direction of the nut. This arrangement of the retention fingers prevents that the retention fingers interfere with the rotation of the fastener on the channel element to a preliminary mounting state in which the flanges of the channel element are received in the accommodation spaces of the channel fastener.

In a possible embodiment of the channel fastener according to the invention the retention fingers are arranged in pairs, wherein, preferably the retention fingers of one pair together generally form a V-shape.

In a possible further embodiment the support includes two pairs of retention fingers, one on each side of the head portion, in particular on each side of a main body of the head portion, adjacent the accommodation spaces of the channel fastener.

In a possible embodiment of the channel fastener according to the invention the bottom portion comprises a bottom plate supporting the anchoring element and the retention fingers push the anchoring element against the bottom plate.

In a further embodiment the bottom portion includes upstanding wall members extending upwardly from the bottom plate, wherein the upstanding wall members includes at least a longitudinal wall portion that extends at the longitudinal end portions of the anchoring element along a side of the anchoring element having the largest length, and wherein the upstanding wall portions have a height that exceeds the thickness of the anchoring element, such that when the anchoring element is in engagement with the bottom plate, an upper edge of the upstanding wall is located above the anchoring element and such that when the fastener is in the position wherein the flanges of the channel element are located in the accommodation spaces, the upper edge of the upstanding wall portions engage the inner side of the flanges in said second preliminary mounting state.

In a possible embodiment of the channel fastener according to the invention the support includes one or more spring members associated with the head portion of the support, wherein said spring members force the bottom portion and the anchoring element towards the inner side of the flanges of the channel element in a preliminary mounting state in which the flanges are located in the accommodation spaces.

The invention also relates to a combination of a fastener according to the invention as described above and a channel element having a bottom, an upper side opposite the bottom and lateral walls that interconnect the upper side and the bottom, wherein the upper side includes flanges that extend from the lateral walls towards each other and a longitudinal slot defined between the flanges and having a slot width, wherein the channel element is of the so called "strut rail" type, i.e. the channel element has inwardly folded flanges, wherein the flanges have edges that are facing the bottom of the channel element.

The invention will be further elucidated in the following description with reference to the drawing, wherein:
Fig. 1 shows in a first view in perspective a possible embodiment of the channel fastener according to the invention,
Fig. 2 shows in a second view in perspective the channel fastener of Fig. 1,
Fig. 3 shows in a third view in perspective the channel fastener of Fig. 1,
Fig. 4 shows a side elevational view from a transverse side of the channel fastener of Fig. 1,
Fig. 5 shows a side elevational view from a longitudinal side of the channel fastener of Fig. 1,
Fig. 6 shows a top elevational view of the channel fastener of Fig. 1,
Fig. 7 shows in a first view in perspective a support of the channel fastener of Fig. 1,
Fig. 8 shows in a second view in perspective the support of the channel fastener of Fig. 1,
Fig. 9 shows a side elevational view of the fastener of Fig. 1 during insertion in the slot of a channel element,
Fig. 10 shows a side elevational view of the fastener of Fig. 1 in a first preliminary mounting state,
Fig. 11 shows a top elevational view of the support of Fig. 7 in an unloaded state,
Fig. 12 shows a top elevational view of the support of Fig. 7 in the first preliminary mounting state of Fig. 10,
Fig. 13 shows in a view in perspective an assembly of the channel fastener of Fig. 1 arranged in a second preliminary mounting state on a channel element,
Fig. 14 shows a side elevational view of the assembly of Fig. 13,
Fig. 15 show another side elevational view of the assembly of Fig. 13, and
Fig. 16 shows a top elevational view of the assembly of Fig. 13.

The present invention relates to a channel fastener adapted to be mounted on a channel element. Such a channel element is in practice also called a mounting rail.

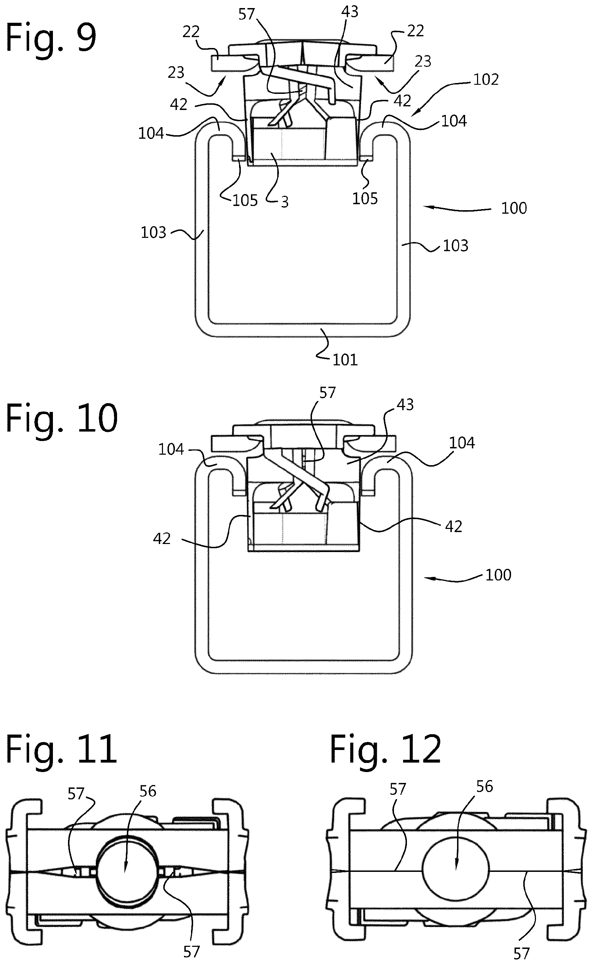

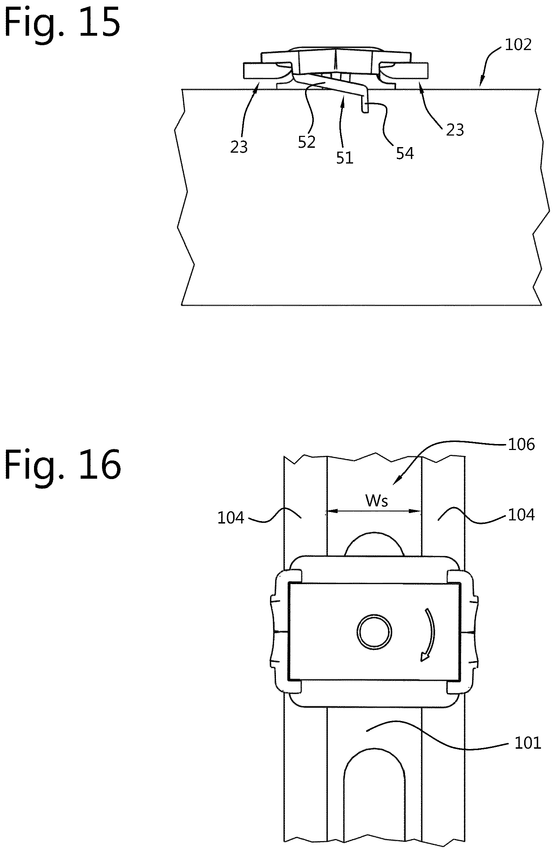

In Fig. 9, Fig. 13 and Fig. 16 such a channel element or mounting rail is visible in cross section, perspective view and top elevation view, respectively. The mounting rail indicated by reference numeral 100 in general has a bottom 101, an upper side 102 opposite the bottom 101 and lateral walls 103 that interconnect the upper side 102 and the bottom 101. The upper side 102 of the channel element includes flanges 104 that extend from the lateral walls 103 towards each other and includes a longitudinal slot 106 defined between the flanges 104. The longitudinal slot 106 has a slot width wₛ. The channel element 100 shown here is specifically called a "strut rail" in the technical field concerned. Such a strut rail has the characteristic that the flanges 104 are folded inwardly such that the edges 105 of the flanges 104 are pointing towards the bottom 101 of the channel element 100. It is noted that the invention will be explained in combination with a strut rail, which is a preferred channel element, but that a channel fastener according to the invention may also be used in combination with other channel elements, e.g. having a regular C-shaped cross section.

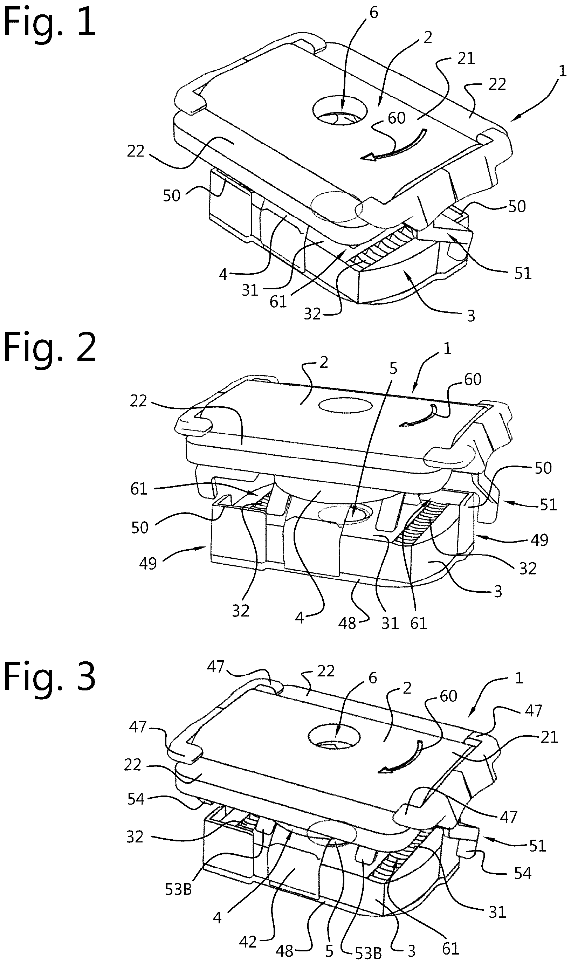

In Figs. 1 - 3 a possible embodiment of a channel fastener according to the invention is shown and indicated by reference numeral 1.

The channel fastener 1 is an assembled part which generally comprises a washer element 2, an anchoring element 3, and a support 4. The washer element 2 is preferably made of metal, but may in some occasions also be made of a suitable plastic material, such as POM. The anchoring element 3 is made of metal. The support 4 is made of an elastic material which interconnects the washer element 2 and the anchoring element 3.

A suitable material for manufacturing the support element 4 is a thermoplastic material. The support 4 is in practice made from the thermoplastic material by an injection moulding process.

The metal washer 2 and the metal anchoring element 3 are made by suitable cutting, punching and forming processes, preferably out of steel strip or sheet material.

The anchoring element 3 may be formed as an elongate nut having a central threaded bore 5, adapted to cooperate with a shaft of a male fastening element such as a threaded rod or a bolt. The anchoring element 3 has a width wₐ that is smaller than the width wₛ of the slot 106 of the channel element 100. The anchoring element has a length lₐ which exceeds the width wₛ of the slot 106. On an upper side 31 of the anchoring element 3 grooves 32 are formed which extend in the transverse direction. These grooves 32 are typical for channel fasteners adapted for use on strut rails, wherein the edges 105 of the flanges 104 can be received in the grooves 32, at least in a final mounting state.

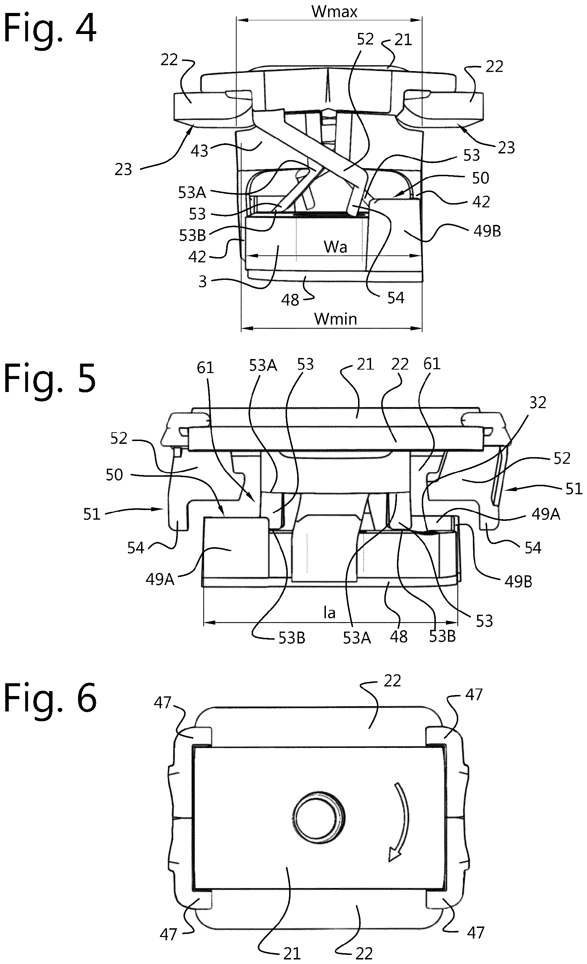

The washer element 2 has a central bore 6 for passing through the shaft of the male fastening element. In the shown embodiment the washer element 2 substantially has a rectangular or square outer contour. The washer element in this specific embodiment comprises a central strip 21, i.e. the strip in which the bore 6 is formed, and two lateral strips 22 which are offset relative to the central strip 21 in a thickness direction of the washer element 2, which can be seen also in Figs. 4 - 6. The lateral strips 22 are adapted to rest with a bearing face 23 on the flanges 104 of the channel element 1 in final mounting state in which the washer element 2 and the anchoring element 3 are tightened towards each other by a male fastening element and a nut cooperating with the male fastening element wherein the nut engages the washer element 3 from above.

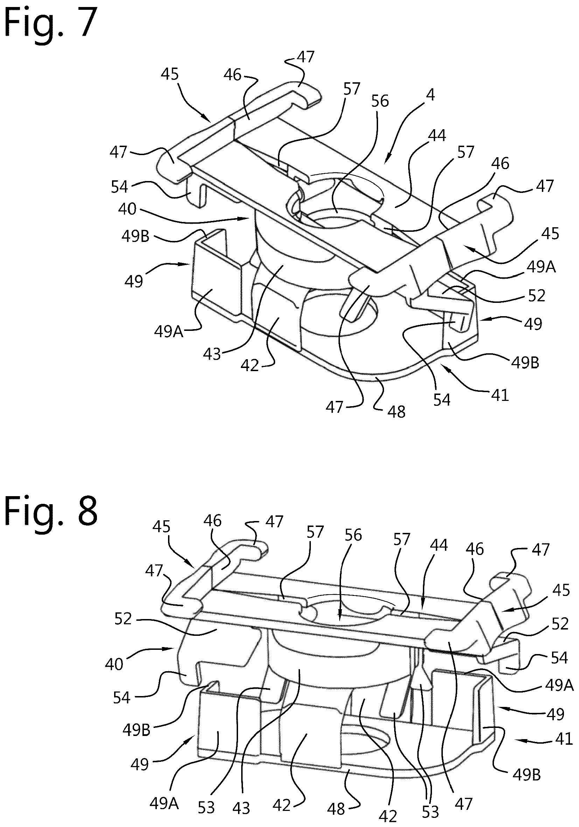

The support 4, which is shown separately in Figs. 7 and 8, comprises a head portion 40 and a bottom portion 41. The head portion 40 and the bottom portion 41 are interconnected by connecting legs 42.

In the specific embodiment shown in the figures, the head portion 40 comprises a main body 43, and a washer support plate 44 which is integrally formed with the main body 43. At the respective ends of the washer support plate 44 coupling members 45 are formed to couple the washer element 2 to the head portion 40 of the support 4. The coupling members 45 comprise each a stop ridge 46 which forms a stop for the head ends of the central strip 21 of the washer element 2. The coupling members 45 furthermore comprise retention fingers 47 at the ends of the stop ridge 46 which in the assembled state extend over the lateral strips 22 of the washer element 2 as can be best seen in Figs 3, 5 and 7. Since the central strip 21 of the washer element 2 lies in height offset with respect to the lateral strips 21, the retention fingers 47 lock the washer element 2 in the height direction and in the lateral direction. The stop ridge 46 locks the washer 2 in the longitudinal direction.

The main body 43 and the washer support plate 44 define a central passage 56 through which a male fastener, such as a threaded rod, can extend. Two longitudinal slits 57 extend from the central passage 56 in the main body 43 and in the washer supporting plate 44 each towards a respective longitudinal end of the washer support plate 44 where the coupling members 45 are formed. The longitudinal slits 57 are opened wide in an unloaded state as is visible in Figs. 7, 8 and 11. The longitudinal slits 57 are closed in a first preliminary mounting state which will be described further below, and as is visible in Fig. 12

The bottom portion 41 is adapted to support the anchoring element 3 from below. The bottom portion 41 comprises in the specific embodiment shown in the figures a bottom plate 48, which supports the anchoring element 3 from below. The bottom portion 41 furthermore comprises upstanding wall members 49 extending upwardly from the bottom plate 48.

The upstanding wall members 49 comprise at least a longitudinal wall portion 49A that extends at the longitudinal end portions of the anchoring element 3 along the side of the anchoring element 3 having the largest length. The upstanding wall members 49 furthermore comprise a transversal wall portion 49B extending at an angle, in the specific embodiment of the figures perpendicular, to the longitudinal wall portion 49A, and forming a corner piece with the corresponding longitudinal wall portion 49A. The specific embodiment of the support 4 shown in the figures has at two diagonally opposite corners of the support plate 48 a corner piece or wall member 49 to lock the anchoring element 3 in the transversal and longitudinal direction.

At least the upstanding wall portions 49A have a height that exceeds the thickness of the anchoring element 3, as can be best seen in Figs. 2, 4 and 5. In the embodiment shown in the figures the wall portions 49B also have a height that exceeds the thickness of the anchoring element 3, however these all portions 49B may also be lower or even with a slanting upper edge. When the anchoring element 3 is in engagement with the bottom plate 48, an upper edge 50 of at least the upstanding wall portion 49A is located above the anchoring element 3.

The connecting legs 42 are each extending from the main body 43 of the head portion 40 to the bottom plate 48 of the bottom portion 41. The connecting legs 42 extend along a longitudinal side of the oblong anchoring element 3, as can be best seen in Figs. 3 - 5.

The main body 43 of the support 4 and the connecting legs 42 together have a tapering shape as can be best seen in Figs. 4 and 9. The main body 43 has a greater width wₘₐₓ at an upper side and the width of the main body and the legs 42, lying in line with the outer contour of the main body 43, decrease towards the bottom portion 41. At the lower end of the legs the width wₘᵢₙ is smaller than the width wₛ of the slot 106 of the channel element 100. The greater width wₘₐₓ exceeds in an unloaded state the width wₛ of the slot 106 of the channel element 100. It is noted that the main body 43 of the support 4 has a smaller dimension in a direction perpendicular to wₘₐₓ, which dimension is preferably smaller than the width wₛ of the slot 106, such that when the channel fastener 1 is turned a quarter turn in the channel element 100, the main body 43 will not engage the flanges 104 anymore as will be described further below.

During installation, the user inserts the bottom portion 41 of the support 4 with the anchoring element 3 in the slot 106 of the channel element 100. This situation is shown in Fig. 9. The bottom portion 41 and the lower end of the connecting legs 42 fit between the flanges 104. When the bottom portion 41 of the channel fastener 1 is moved further into the channel element 100 the connecting legs 42 and or the main body 43 will start to rub against the flanges 104 of the channel element 100. This will cause a compression force on the main body 43 and possibly the legs 42. This compression force will result in a deformation of the main body 43 wherein the slits 57 will be deformed from an open state as is shown in Fig. 11 to a closed state which is shown in Fig. 12. In Fig. 10 is shown the state in which the main body 43 of the support 4 is thus resiliently clamped between the flanges 104 of the channel element 100. The channel fastener 1 can thus be held in this first preliminary mounting state on the channel element 100. If necessary, the user can still shift the channel fastener 1 longitudinally along the channel element 100 to move it to the desired position on the channel element 100.

The support 4 furthermore includes spring members 51. In the specific embodiment shown in the figures, the spring members 51 are associated with the head portion 40 of the support 4 at a longitudinal end portion of the washer support plate 44. The spring members 51 in this specific embodiment comprise tongues 52 which extend obliquely from an underside of the washer support plate 44 of the head portion 40 of the support 4 towards the anchoring element 3.

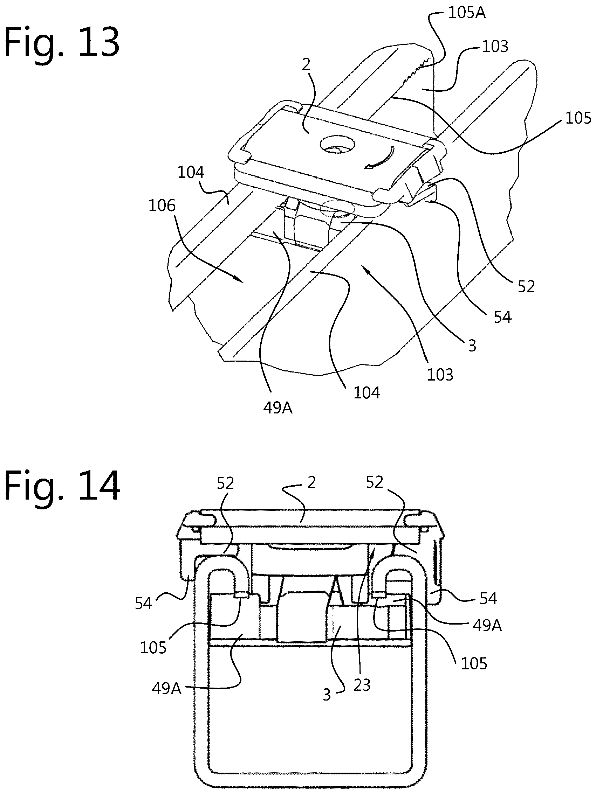

When the channel fastener 1 is in the first preliminary mounting state, as shown in Fig. 10, it can be rotated as is indicated by arrow 60 (cf. Figs. 1 - 3). In this example the arrow 60 is provided on the top surface of the washer, but such an arrow may be omitted. The channel fastener 1 is thus rotated towards a second preliminary mounting state, which is shown in Figs. 13 - 16. During the rotation the spring members 51 will engage the flanges 104 of the channel element 100 and rub over the upper side of the flanges 104. Thereby the spring members 51, in particular the tongues 52, will be flexed towards the washer element 2 which results in a spring force. When the fastener 1 is turned, preferably a quarter turn, as is shown in Figs. 13 - 16, the respective flanges 104 enter a space between the washer element 2 and the longitudinal end portions of the oblong anchoring element 3. These spaces will be called herein an accommodation space indicated by reference numeral 61. The channel fastener 1 thus has two accommodation spaces 61 for accommodating the two flanges 104 of the channel element 100. When the flanges 104 are in the accommodation spaces 61, the spring elements 51 push the washer element 2 away from the upper side of the flanges 104 and pull the anchoring element 3 towards the underside of the flanges, in this case with the edge 105 of the flanges 104. Since the upper edge 50 of the respective longitudinal wall portions 49A extends above the upper side of the anchoring element 3, the upper edge 50 of the longitudinal wall portions 49A will be pulled in engagement with the edge 105 of the respective flanges 104, which is best visible in Fig. 14.

In the second preliminary mounting state the main body 43 will not be clamped anymore between the flanges 104, because it has a smaller longitudinal dimension than the width wₛ of the slot 106 as mentioned in the above. The user can slide the fastener 1 along the channel element 100. The flanges 104 of the channel element 100 are located in the accommodation spaces 61 and the upper edge 50 of the upstanding wall portions 49A engage the edge 105 of the flanges 104. The elastic nature of the plastic material of the support 4 allows that the respective wall portions 49A can slide over the edge 105 of the respective flanges 104. In particular this also works when the edge is serrated, i.e. provided with teeth, as is indicated in Fig. 13 by reference numeral 105A. The upper edge 50 of the wall portion 49A in rest resides between two teeth of the serration, but the wall portion can deform to pass the teeth of the serration during movement of the fastener 1 along the channel element 100. However, the wall portions 49A are sturdy enough to maintain the fastener 1 in position on the channel element 100, when it is not pushed along the channel element 100 by a user. The sturdiness is improved by the transverse wall portion 49B integrally formed with the longitudinal wall portion 49A, which provides rigidity to the corner piece 49. An advantage of the wall portions 49A engaging the edges 105 of the flanges 104 is that it does not depend on the thickness of the anchoring element 3 how easy the fastener can be slid along the channel element. It is noted that the thickness of anchoring elements may vary considerably due to tolerances in blank material and due to manufacturing tolerances. The dimensional relation between the wall portion 39A and the spring members 51 is better defined than the relation between the thickness of the anchoring element 3 and the spring elements 51. Therefore, and also due the flexible nature of the wall portion 39A the fastener 1 can provide a fairly constant and predefined holding force by the support 4 itself and thus a predefined and constant force to overcome the friction to move the fastener 1 along the channel element 100.

In the specific embodiment of the figures the support 4 furthermore includes one or more resilient retention fingers 53 having a proximal end 53A connected to the head portion 40 and a distal end 53B located near or in contact with the anchoring element 3, as can be best seen in Figs. 2, 4, 5 and 8. The retention fingers 53 extend from the main body obliquely towards the upper side of the anchoring element 3 and are adapted to retain the anchoring element 3 on the bottom plate 48 of the support 4 in an unmounted state. The retention fingers 53 however allow that the anchoring element 3 is moved towards the washer element 2 when the washer element 2 and the anchoring element 3 are tightened together by a male fastening element, possibly in cooperation with a nut. Thereto the retention fingers 53 are resiliently deformable. The oblique position of the retention fingers 53 facilitates their deformation for allowing the anchoring element 3 to move towards the washer element 2. The retention fingers 53 allow the support 4 to be used flexibly with anchoring elements 3 with different thicknesses. It is noted that retention fingers can be omitted in theory, and that for example on an inner side of the connecting legs 52, a retention lug may be formed which extends over the upper edge of the anchoring element 3 as is known from the prior art (e.g. from USD 494,887). Such a retention lug however is not as convenient in use when it comes to varying thicknesses of the anchoring element 3.

In the preliminary mounting position shown in Figs. 13 - 16 a male fastener can inserted through the passages 6 and 56 and screwed into the bore 5 in the anchoring element 3. A nut on the male fastening element can be used to tighten the channel fastener 100 on the channel element 100.

A blocking finger 54 is formed on an end of at least one of the spring members 51. The blocking finger 54 extends downwards under an angle with respect to the tongue 52. In the second preliminary mounting state as is shown in Figs. 13 - 16, the tongue 52 rests on the upper side of the flange of the channel element 100 and the blocking finger 54 extends beyond the edge of at least one of the flanges 104 and a side wall 103 of the channel element 100, so as to block unintentional rotation of the fastener from that preliminary mounting state.

This may for example be useful when the channel fastener 1 is released from a fixed state, in which the washer element 2 and the anchoring element 3 are clamped against the flanges 104, to a preliminary mounting state shown in Figs. 13 - 16. For releasing the fastener 1, the cooperating male fastening element, e.g. a threaded rod and a cooperating nut are released and thus the nut is rotated counter-clockwise. The blocking fingers 54 prevent that the entire channel fastener 1 starts to rotate due to frictional forces.

## Claims

1. Channel fastener (1) for fastening an object to an elongate channel element (100) having a bottom (101), an upper side (102) opposite the bottom and lateral walls (103) that interconnect the upper side and the bottom, wherein the upper side (102) includes flanges (104) that extend from the lateral walls (103) towards each other and a longitudinal slot (106) defined between the flanges (104) and having a slot width (wₛ),
wherein the fastener (1) comprises:
- a metal washer element (2), which has a bearing face (23) that is arranged for resting against the outer side of the flanges (104) of the channel element (100),
- an oblong metal anchoring element (3) having a width (wₐ) smaller than the slot width (wₛ) and a length (lₐ) larger than the slot width (wₛ), said anchoring element (3) being located on the side of the washer element (2) where the bearing face (23) is located and has longitudinal end portions adapted to engage an inner side of the respective flanges (104) of the channel element (100),
- a support (4) for the anchoring element (3), which support (4) is made of an elastic material and is connected to the washer element (2), possibly detachably, and which support (4) bears the anchoring element (3),
the fastener (1) having between the washer element (2) and each longitudinal end portion of the anchoring element (3) an accommodation space (61) which is accessible from the side of the fastener (1), each accommodation space (61) being adapted for the accommodation of a flange (104) of the channel element (100), in such a way that the fastener (1) with its oblong anchoring element (3) can be aligned with the longitudinal slot (106) and the anchoring element (3) can be inserted through the longitudinal slot (106) into the channel element (100), and in such a way that subsequently after turning of the fastener (1), preferably a quarter turn, the anchoring element (3) extends at an angle, preferably substantially at right angles, relative to the longitudinal slot (106), so that the flanges (104) of the channel element (100) are located in the accommodation spaces (61), wherein the anchoring element (3) and the washer element (2) can subsequently be tensioned towards each other wherein the longitudinal end portions of the anchoring element (3) engage the inner side of the flanges (104) of the channel element (100) in order to fix the fastener (1) to the channel element (100),
wherein the support (4) comprises:
- a head portion (40) having one or more coupling members (45), which coupling members, possibly detachably, couple the washer element (2) to the support (4),
- a bottom portion (41) which supports the anchoring element (3) from below, and
- connecting legs (42), each extending from the head portion (40) to the bottom portion (41) below the anchoring element (3), and connecting the head portion (40) and the bottom portion (41), wherein the connecting legs (42) extend along a longitudinal side of the oblong anchoring element (3),
**characterized in that** the support (4) includes one or more resilient retention fingers (53) having a proximal end connected to the head portion (40) and a distal end located near or in contact with the anchoring element (3), in particular an upper side of the anchoring element (3), so as to retain the anchoring element (3) on the bottom portion (41) of the support (4).

2. Fastener according to claim 1, wherein the one or more retention fingers (53) extend from the head portion (40) obliquely towards the upper side of the anchoring element (3) and are adapted to retain the anchoring element (3) on the bottom portion (41) of the support (4) in an unmounted state.

3. Fastener according to any of the preceding claims, wherein the one or more retention fingers (53) extend from the head portion (40) downward and in transverse direction of the anchoring element (3).

4. Fastener according to any of the preceding claims, wherein the retention fingers (53) are arranged in pairs.

5. Fastener according to claim 4, wherein the retention fingers (53) of one pair together generally form a V-shape.

6. Fastener according to claim 4 or 5, wherein the support (4) includes two pairs of retention fingers (53), one on each side of the head portion (40) adjacent the accommodation spaces (61) of the channel fastener (100).

7. Fastener according to any of the preceding claims, wherein the bottom portion (41) comprises a bottom plate (48) supporting the anchoring element (3) and wherein the retention fingers (53) push the anchoring element (3) against the bottom plate (48).

8. Fastener according to claim 7, wherein the bottom portion (41) includes upstanding wall members (49) extending upwardly from the bottom plate (48), wherein the upstanding wall member (49) includes at least a longitudinal wall portion (49A) that extends at the longitudinal end portions of the anchoring element (3) along a side of the anchoring element (3) having the largest length, and wherein the upstanding wall portions (49A) have a height that exceeds the thickness of the anchoring element (3), such that when the anchoring element (3) is in engagement with the bottom plate (48), an upper edge of the upstanding wall portion (49A) is located above the anchoring element (3) and such that when the fastener (1) is in the position wherein the flanges (104) of the channel element (100) are located in the accommodation spaces (61), the upper edge of the upstanding wall portions (49A) engage the inner side of the flanges (104) in said second preliminary mounting state.

9. Fastener according to any of the preceding claims, wherein the support (4) includes one or more spring members (51) associated with the head portion (40) of the support (4), wherein said spring members (51) force the bottom portion (41) and the anchoring element (3) towards the inner side of the flanges (104) of the channel element (100) in a preliminary mounting state in which the flanges (104) are located in the accommodation spaces (61).

10. Combination of a fastener (1) according to any of the preceding claims and a channel element (100) having a bottom (101), an upper side (102) opposite the bottom (101) and lateral walls (103) that interconnect the upper side (102) and the bottom (101), wherein the upper side (102) includes flanges (104) that extend from the lateral walls (103) towards each other and a longitudinal slot (106) defined between the flanges (104) and having a slot width (wₛ), wherein the channel element (100) is of the so called "strut rail" type, i.e. the channel element (100) has inwardly folded flanges (104), wherein the flanges (104) have edges (105) that are facing the bottom (101) of the channel element (100).

## Patentansprüche

1. Kanalbefestigungselement (1) zum Befestigen eines Objekts an einem länglichen Kanalelement (100) mit einer Unterseite (101), einer der Unterseite gegenüberliegenden Oberseite (102) und Seitenwänden (103), die die Oberseite und die Unterseite verbinden, wobei die Oberseite (102) Kragen (104) aufweist, die sich von den Seitenwänden (103) zueinander hin erstrecken, und mit einem Längsschlitz (106), der zwischen den Kragen (104) definiert ist und eine Schlitzbreite (wₛ) aufweist,
wobei das Befestigungselement (1) Folgendes umfasst:
- ein Metallunterlegscheibenelement (2), das eine Auflagefläche (23) aufweist, die zum Anliegen gegen die Außenseite der Kragen (104) des Kanalelements (100) angeordnet ist,
- ein langgestrecktes Metallverankerungselement (3), das eine kleinere Breite (wₐ) als die Schlitzbreite (wₛ) und eine größere Länge (lₐ) als die Schlitzbreite (wₛ) aufweist, wobei sich das Verankerungselement (3) an der Seite des Unterlegscheibenelements (2) befindet, wo sich die Auflagefläche (23) befindet und längliche Endabschnitte aufweist, die eingerichtet sind, um eine Innenseite der jeweiligen Kragen (104) des Kanalelements (100) in Eingriff zu nehmen,
- einen Träger (4) für das Verankerungselement (3), wobei der Träger (4) aus einem elastischen Material hergestellt und mit dem Unterlegscheibenelement (2), möglicherweise trennbar, verbunden ist, und wobei der Träger (4) das Verankerungselement (3) trägt,
wobei das Befestigungselement (1) zwischen dem Unterlegscheibenelement (2) und jedem länglichen Endabschnitt des Verankerungselements (3) einen Aufnahmeraum (61) aufweist, auf den von der Seite des Befestigungselements (1) zugegriffen werden kann, wobei jeder Aufnahmeraum (61) für die Aufnahme eines Kragens (104) des Kanalelements (100) derart eingerichtet ist, dass das Befestigungselement (1) mit seinem langgestreckten Verankerungselement (3) mit dem Längsschlitz (106) ausgerichtet werden kann und das Verankerungselement (3) durch den Längsschlitz (106) in das Kanalelement (100) eingesetzt werden kann, und derart, dass anschließend an eine Drehung des Befestigungselements (1), vorzugweise um eine Vierteldrehung, sich das Verankerungselement (3) in einem Winkel, vorzugsweise im Wesentlichen um rechte Winkel, relativ zum Längsschlitz (106) erstreckt, so dass die Kragen (104) des Kanalelements (100) sich in den Aufnahmeräumen (61) befinden, wobei das Verankerungselement (3) und das Unterlegscheibenelement (2) anschließend zueinander gespannt werden können, wobei die länglichen Endabschnitte des Verankerungselements (3) die Innenseite der Kragen (104) des Kanalelements (100) in Eingriff nehmen, um das Befestigungselement (1) an dem Kanalelement (100) zu befestigen,
wobei der Träger (4) Folgendes umfasst:
- einen Kopfabschnitt (40) mit einem oder mehreren Kopplungsgliedern (45), wobei die Kopplungsglieder das Unterlegscheibenelement (2), möglicherweise trennbar, mit dem Träger (4) koppeln,
- einen unteren Abschnitt (41), der das Verankerungselement (3) von unten trägt, und
- Verbindungsschenkel (42), die sich jeweils vom Kopfabschnitt (40) zum unteren Abschnitt (41) unterhalb des Verankerungselements (3) erstrecken und den Kopfabschnitt (40) und den unteren Abschnitt (41) verbinden, wobei die Verbindungsschenkel (42) sich entlang einer Längsseite des langgestreckten Verankerungselements (3) erstrecken,
**dadurch gekennzeichnet, dass** der Träger (4) einen oder mehrere elastische Arretierfinger (53) aufweist, die ein proximales Ende, das mit dem Kopfabschnitt (40) verbunden ist, und ein distales Ende, das sich nahe oder in Kontakt mit dem Verankerungselement (3), insbesondere mit einer Oberseite des Verankerungselements (3), befindet, aufweisen, um das Verankerungselement (3) an dem unteren Abschnitt (41) des Trägers (4) zu halten.

2. Befestigungselement nach Anspruch 1, wobei der eine oder die mehreren Arretierfinger (53) sich vom Kopfabschnitt (40) schräg zu der Oberseite des Verankerungselements (3) hin erstrecken und eingerichtet sind, um in einem unbefestigten Zustand das Verankerungselement (3) an dem unteren Abschnitt (41) des Trägers (4) zu halten.

3. Befestigungselement nach einem der vorhergehenden Ansprüche, wobei der eine oder die mehreren Arretierfinger (53) sich vom Kopfabschnitt (40) nach unten und in querverlaufender Richtung zum Verankerungselement (3) erstrecken.

4. Befestigungselement nach einem der vorhergehenden Ansprüche, wobei die Arretierfinger (53) in Paaren angeordnet sind.

5. Befestigungselement nach Anspruch 4, wobei die Arretierfinger (53) eines Paares zusammen im Allgemeinen eine V-Form bilden.

6. Befestigungselement nach Anspruch 4 oder 5, wobei der Träger (4) zwei Paar Arretierfinger (53) aufweist, eines auf jeder Seite des Kopfabschnitts (40) neben den Aufnahmeräumen (61) des Kanalbefestigungselements (100).

7. Befestigungselement nach einem der vorhergehenden Ansprüche, wobei der untere Abschnitt (41) eine untere Platte (48) umfasst, die das Verankerungselement (3) trägt, und wobei die Arretierfinger (53) das Verankerungselement (3) gegen die untere Platte (48) drücken.

8. Befestigungselement nach Anspruch 7, wobei der untere Abschnitt (41) ein oder mehrere aufrechtstehende Wandglieder (49), die sich von der unteren Platte (48) nach oben erstrecken, umfasst, wobei das aufrechtstehende Wandglied (49) mindestens einen länglichen Wandabschnitt (49A) aufweist, der sich an den länglichen Endabschnitten des Verankerungselements (3) entlang einer Seite des Verankerungselements (3) mit der größten Länge erstreckt, und wobei die aufrechtstehenden Wandabschnitte (49A) eine Höhe aufweisen, die die Dicke des Verankerungselements (3) derart übersteigt, dass, wenn das Verankerungselement (3) in Eingriff mit der unteren Platte (48) steht, ein oberer Rand des aufrechtstehenden Wandabschnitts (49A) sich über dem Verankerungselement (3) befindet, und derart, dass, wenn das Befestigungselement (1) in Position ist, in der die Kragen (104) des Kanalelements (100) sich in den Aufnahmeräumen (61) befinden, der obere Rand der aufrechtstehenden Wandabschnitte (49A) im vorläufigen Befestigungszustand die Innenseite der Kragen (104) in Eingriff nimmt.

9. Befestigungselement nach einem der vorhergehenden Ansprüche, wobei der Träger (4) ein oder mehrere Federglieder (51) aufweist, die mit dem Kopfabschnitt (40) des Trägers (4) in Verbindung stehen, wobei die Federglieder (51) den unteren Abschnitt (41) und das Verankerungselement (3) in einem vorläufigen Befestigungszustand zu der Innenseite der Kragen (104) des Kanalelements (100) hin zwingen, in welchem vorläufigen Befestigungszustand sich die Kragen (104) in den Aufnahmeräumen (61) befinden.

10. Kombination aus einem Befestigungselement (1) nach einem der vorhergehenden Ansprüche und einem Kanalelement (100) mit einer Unterseite (101), einer der Unterseite (101) gegenüberliegenden Oberseite (102) und Seitenwänden (103), die die Oberseite (102) und die Unterseite (101) verbinden, wobei die Oberseite (102) Kragen (104) aufweist, die sich von den Seitenwänden (103) zueinander hin erstrecken, und einen Längsschlitz (106), der zwischen den Kragen (104) definiert ist und eine Schlitzbreite (wₛ) aufweist, wobei das Kanalelement (100) vom sogenannten "Strebenschienen"-Typ ist, d.h. das Kanalelement (100) weist nach innen gebogene Kragen (104) auf, wobei die Kragen (104) Ränder (105) aufweisen, die zur Unterseite (101) des Kanalelements (100) zeigen.

## Revendications

1. Fixation (1) de canal pour fixer un objet à un élément de canal (100) allongé ayant un fond (101), un côté supérieur (102) opposé au fond et des parois latérales (103) qui interconnectent le côté supérieur et le fond, dans laquelle le côté supérieur (102) comprend des brides (104) qui s'étendent des parois latérales (103) l'une vers l'autre et une fente longitudinale (106) définie entre les brides (104) et ayant une largeur de fente (wₛ),
dans laquelle la fixation (1) comprend :
- un élément de rondelle (2) métallique, qui a une face d'appui (23) qui est agencée pour s'appuyer contre le côté extérieur des brides (104) de l'élément de canal (100),
- un élément d'ancrage (3) métallique oblong ayant une largeur (wₐ) inférieure à la largeur de fente (wₛ) et une longueur (lₐ) supérieure à la largeur de fente (wₛ), ledit élément d'ancrage (3) étant situé sur le côté de l'élément de rondelle (2) où se trouve la face d'appui (23) et comporte des parties d'extrémité longitudinales adaptées pour entrer en prise avec un côté intérieur des brides (104) respectives de l'élément de canal (100),
- un support (4) pour l'élément d'ancrage (3), lequel support (4) est constitué d'un matériau élastique et est relié à l'élément de rondelle (2), éventuellement détachable, et lequel support (4) porte l'élément d'ancrage (3),
la fixation (1) ayant entre l'élément de rondelle (2) et chaque partie d'extrémité longitudinale de l'élément d'ancrage (3) un espace de logement (61) qui est accessible du côté de la fixation (1), chaque espace de logement (61) étant adapté pour le logement d'une bride (104) de l'élément de canal (100), de telle sorte que la fixation (1) avec son élément d'ancrage (3) oblong puisse être aligné avec la fente longitudinale (106) et que l'élément d'ancrage (3) puisse être inséré à travers la fente longitudinale (106) dans l'élément de canal (100), et de telle sorte que, après avoir tourné la fixation (1), de préférence d'un quart de tour, l'élément d'ancrage (3) s'étende en biais, de préférence sensiblement à angle droit, par rapport à la fente longitudinale (106), de sorte que les brides (104) de l'élément de canal (100) se trouvent dans les espaces de logement (61), dans laquelle l'élément d'ancrage (3) et l'élément de rondelle (2) peuvent ensuite être mis sous tension l'un vers l'autre dans laquelle les parties d'extrémité longitudinales de l'élément d'ancrage (3) entrent en prise dans le côté intérieur des brides (104) de l'élément de canal (100) afin de fixer la fixation (1) à l'élément de canal (100),
dans laquelle le support (4) comprend :
- une partie de tête (40) ayant un ou plusieurs éléments d'accouplement (45), lesquels éléments d'accouplement, éventuellement détachables, couplent l'élément de rondelle (2) au support (4),
- une partie de fond (41) qui soutient l'élément d'ancrage (3) par le bas, et
- des pattes de connexion (42), chacune s'étendant de la partie de tête (40) à la partie de fond (41) sous l'élément d'ancrage (3), et reliant la partie de tête (40) et la partie de fond (41), dans laquelle les pattes de connexion (42) s'étendent le long d'un côté longitudinal de l'élément d'ancrage (3) oblong,
**caractérisée en ce que** le support (4) comprend un ou plusieurs doigts de retenue (53) élastiques ayant une extrémité proximale reliée à la partie de tête (40) et une extrémité distale située à proximité ou en contact avec l'élément d'ancrage (3), en particulier un coté supérieur de l'élément d'ancrage (3), de sorte à retenir l'élément d'ancrage (3) sur la partie de fond (41) du support (4).

2. Fixation selon la revendication 1, dans laquelle le un ou plusieurs doigts de retenue (53) s'étendent depuis la partie de tête (40) obliquement vers le coté supérieur de l'élément d'ancrage (3) et sont adaptés à retenir l'élément d'ancrage (3) sur la partie de fond (41) du support (4) dans un état démonté.

3. Fixation selon l'une quelconque des revendications précédentes, dans laquelle le un ou plusieurs doigts de retenue (53) s'étendent depuis la partie de tête (40) vers le bas et dans une direction transverse de l'élément d'ancrage (3) .

4. Fixation selon l'une quelconque des revendications précédentes, dans laquelle les doigts de retenue (53) sont agencés en paires.

5. Fixation selon la revendication 4, dans laquelle les doigts de retenue (53) d'une paire forment généralement un V.

6. Fixation selon la revendication 4 ou 5, dans laquelle le support (4) comprend deux paires de doigts de retenue (53), une de chaque côté de la partie de tête (40) adjacent à l'espace de logement (61) de la fixation de canal (100).

7. Fixation selon l'une quelconque des revendications précédentes, dans laquelle la partie de fond (41) comprend une plaque de fond (48) supportant l'élément d'ancrage (3) et dans laquelle les doigts de retenue (53) poussent l'élément d'ancrage (3) contre la plaque de fond (48).

8. Fixation selon la revendication 7, dans laquelle la partie de fond (41) comprend des éléments de paroi verticaux (49) s'étendant vers le haut depuis la plaque de fond (48), dans laquelle l'élément de paroi vertical (49) comprend au moins une partie de paroi longitudinale (49A) qui s'étend au niveau des parties d'extrémité longitudinales de l'élément d'ancrage (3) le long d'un côté de l'élément d'ancrage (3) ayant la plus grande longueur, et dans laquelle les parties de paroi verticales (49A) ont une hauteur qui dépasse l'épaisseur de l'élément d'ancrage (3), de telle sorte que lorsque l'élément d'ancrage (3) est en prise avec la plaque de fond (48), un bord supérieur de la partie de paroi verticale (49A) est situé au-dessus de l'élément d'ancrage (3) et de telle sorte que lorsque la fixation (1) est dans la position dans laquelle les brides (104) de l'élément de canal (100) sont situées dans les espaces de logement (61), le bord supérieur des parties de paroi verticales (49A) est en prise avec le côté intérieur des brides (104) dans ledit deuxième état de montage préliminaire.

9. Fixation selon l'une quelconque des revendications précédentes, dans laquelle le support (4) comprend un ou plusieurs éléments de ressort (51) associés à la partie de tête (40) du support (4), dans laquelle lesdits éléments de ressort (51) forcent la partie de fond (41) et l'élément d'ancrage (3) vers le côté intérieur des brides (104) de l'élément de canal (100) dans un état de montage préliminaire dans lequel les brides (104) sont situées dans les espaces de logement (61).

10. Combinaison d'une fixation (1) selon l'une des revendications précédentes et d'un élément de canal (100) ayant un fond (101), un côté supérieur (102) opposé au fond (101) et des parois latérales (103) qui relient le côté supérieur (102) et le fond (101), dans laquelle la face supérieure (102) comprend des brides (104) qui s'étendent des parois latérales (103) l'une vers l'autre et une fente longitudinale (106) définie entre les brides (104) et ayant une largeur de fente (wₛ), dans laquelle l'élément de canal (100) est du type dit "rail de support", c'est-à-dire que l'élément de canal (100) a des brides (104) pliées vers l'intérieur, dans laquelle les brides (104) ont des bords (105) qui font face au fond (101) de l'élément de canal (100).
